# EUROPÄISCHE PATENTSCHRIFT

(11) **EP 0 910 133 B1**
(45) Veröffentlichungstag und Bekanntmachung des Hinweises auf die Patenterteilung: **02.10.2002**
(21) Anmeldenummer: 98109685.2
(22) Anmeldetag: 28.05.1998
(51) Int. Cl.: H01Q 7/00, H01Q 1/22, G06K 7/08, G07C 1/26, G01V 3/12

(54) **Transponder-Antenne**
Transponder antenna
Antenne pour transpondeur

(30) Priorität: 15.10.1997 DE 19745282
(43) Veröffentlichungstag der Anmeldung: 21.04.1999
(73) Patentinhaber: Motz Computer Service & Vertriebs GmbH, 37671 Höxter (DE)
(72) Erfinder: Gessner, Annette, 66894 Käshofen (DE); Fritsch, Hans Ulrich, Dr., 90542 Eckental (DE)
(74) Vertreter: Menges, Rolf, Dipl.-Ing.

(56) Entgegenhaltungen:
- EP-A- 0 683 293
- EP-A- 0 738 984
- EP-A- 0 758 119
- DE-A- 4 440 855

## Beschreibung

Die Erfindung betrifft eine Anordnung einer Einsatzstellen-Antenne gemäß dem Oberbegriff des Anspruches 1.

Eine solche Antenne die auch Transponder-Antenne genannt wird, ist hinsichtlich ihres Aufbaus und Betriebs aus der EP-A 0 582 137 und hinsichtlich der zu übermittelnden Daten aus der EP-A 0 758 119 bekannt, worauf hier zur Ergänzung nachstehender Beschreibung ausdrücklich Bezug genommen wird.

Eine Einsatzstellen-Antenne dient der induktiven berührungslosen Abfrage der in einem passiven Transponder gespeicherten Informationen, indem ein von der Antenne abgestrahltes Hochfrequenzfeld einerseits die notwendige Energie zum Betrieb des integrierten Schaltkreises für ein Auslesen des Transponder-Speichers übermittelt und andererseits dieses Feld im Rhythmus der aus dem Transponder-Speicher ausgelesenen Informationen durch Belastung der Transponder-Antennenspule moduliert wird. Die Zeitabfolge der Schwächung dieses Hochfrequenzfeldes wird in der Einsatzstellen-Antenne demoduliert und liefert so abfrageseitig die aus dem Transponder-Speicher ausgelesenen Informationen, vor allem eine einmalige und unveränderliche Transponder- oder Identinformation zur Individualisierung des jeweils gerade erfaßten Teilnehmers (d.h. seines Transponders).

In prinzipiell gleicher Weise kann durch eine sendeseitige Modulation des von der Einsatzstellen-Antenne abgestrahlten Hochfrequenzfeldes, die im Transponder-Schaltkreis demoduliert wird, eine binärkodierte Information in den Transponder-Speicher hineingeschrieben werden.

Insbesondere bei Verwendung von Transpondern zur Identifikation der Teilnehmer sportlicher Wettbewerbe, zumal der Brieftauben bei Tauben-Preisflügen, wird mittels derartiger Antennen an der Einsatzstelle die Identität der aktuell zum Wettkampf angemeldeten, mit solchen passiven HF-Transpondern ausgestatteten Teilnehmer festgehalten. Im Ziel (etwa im Taubenschlag des Zuchters) wird mit einer gleichartigen - nur für Lesebetrieb ausgerüsteten - Antenne bei der Ankunft eines jeden Wettkampf-Teilnehmers dessen Identität als die Transponderinformation aus dem Transponderspeicher ausgelesen und in Kombination mit der aktuellen Zeit für die Siegerauswertung abgespeichert.

Zur Abwehr etwaiger Manipulationen kann gemäß DE-U-93 19 759 vorgesehen sein, die Einsatzstellen-Antenne auch zum Schreiben auszurüsten und damit für den aktuellen Wettkampfeinsatz bei jeder Teilnehmer-Meldung (also in Verbindung mit dem Auslesen einer jeden Transponderinformation) eine nicht vorherbestimmbare zusätzliche Sicherungsinformation, bevorzugt in Form einer Zufallszahl, zu generieren. Die wird mittels der Einsatzstellen-Antenne in einen zugeordneten Schreib-Lese-Bereich des Speichers des gerade erfaßten Transponder übertragen, sowie in einer gesondert geführten Einsatz-Kontrolliste notiert. Nur wenn im Transponder-Speicher des ins Ziel gelangenden Wettkampfteilnehmers die unveränderliche Transponderinformation noch mit der für diesen aktuellen Wettkampf an diesen individuellen Teilnehmer vergebenen Sicherungsinformation kombiniert ist, dann handelt es sich tatsächlich um den für diesen Wettkampf eingesetzten Transponder. Allerdings erfordert die Übertragung einer (Sicherungs-) Information von der Antenne in den Transponder-Speicher eine vergleichsweise sehr hohe Feldstärke; so daß grundsätzlich nicht ausgeschlossen werden kann, daß ein Unbefugter unbemerkt diese aktuell generierte Zufallsinformation aufnimmt und zu Manipulationszwecken einem fiktiven Teilnehmertransponder zuordnet. Deshalb ist es zweckmäßiger, beim Wettkampf-Einsatz von der Antenne nicht die komplette Sicherungsinformation auszustrahlen; sondern nur ein neutrales Initialisierungskommando, von dem im Transponder-Schaltkreis ein Zufallsgenerator aktiviert wird, um so im Transponder selbst eine Zufallsinformation zu generieren und als die aktuelle Sicherungsinformation abzuspeichern. Diese aktuell eingespeicherte Sicherungsinformation wird zusammen mit der unveränderlichen Transponderinformation von der Einsatzstellen-Antenne für die externe Dokumentation ausgelesen, was mit sehr viel geringerer Feldstarke als ein Sendevorgang, und somit praktisch abhörsicher, möglich ist.

Allerdings muß hierfür der Transponder-Schaltkreis dementsprechend mit einem Zufallsgenerator ausgestattet sein, was einen vergleichsweise kostspieligen Chip bedingt. Für die in der Praxis im Einsatz befindlichen einfacheren Transponder-Schaltkreise, in die mangels internen Zufallsgenerators eine extern generierte (Zufalls-) Sicherungsinformation eingeschrieben werden muß, sind deshalb andere Einsatzstellen-Antennen erforderlich, als für die - größere Sicherheit gewährleistenden - Transponderschaltkreise mit interner Generierung der Sicherungsinformation. Das bedingt, daß in der Einsatzstelle mehrere Antennen entsprechend unterschiedlicher Auslegung betriebsbereit vorgehalten werden müssen, wenn aus sportlichen Gründen Teilnehmer mit unterschiedlicher Transponder-Technologie zu einem Wettkampf zugelassen werden sollen. Das ist aus Kostengründen unter Umständen kleineren Veranstaltern nicht zumutbar, wahrend aus sportlichen Gründen der Ausschluß von Teilnehmern mit bestimmter technischer Ausstattung satzungsgemäß möglicherweise nicht in Frage kommt.

In Erkenntnis dieser Gegebenheiten liegt vorliegender Erfindung die technische Problemstellung zugrunde, durch apparative Maßnahmen solche Einschränkung aufzuheben.

Diese Aufgabe wird erfindungsgemäß gelöst, wie in Patentanspruch 1 angegeben ist.

Dieser Lösung zufolge arbeitet also die - eine Initialisierung des Sicherungs-Generators hervorrufende - Einsatzstellen-Antenne auf einen Transponder mit internem Sicherungs-Generator unmittelbar; dagegen nur mittelbar auf einen Transponder ohne solchen internen Sicherungsgenerator - nämlich hier nun über einen Emulations-Adapter, der lokal in sich die aktuelle Sicherungsinformation generiert und (wenn auch abhörgefährdet) in den entsprechend einfacher ausgestatteten Transponderschaltkreis einschreibt. Der Adapter weist also zwei induktive Schnittstellen auf, eine zur Entgegennahme des Initialisierungskommandos von der Einsatzstellen-Antenne her und zur Rückmeldung einer Transponderinformation samt der im Transponder intern erzeugten Sicherungsinformation sowie eine zweite zum Aussenden einer intern im Adapter generierten Sicherungsinformation an den einfach ausgestatteten Transponder und zur Abfrage dessen Transponderinformation samt Rückmeldung der ihr zugeordneten Sicherungsinformation. Dabei können die beiden induktiven Schnittstellen auch körperlich zu einer einzigen Induktivität (insbesondere zu einer großflächigen Luftspule) vereinigt sein, die für die beiden unterschiedlichen Aufgaben des Emulations-Adapters im Zeitmultiplex betrieben wird.

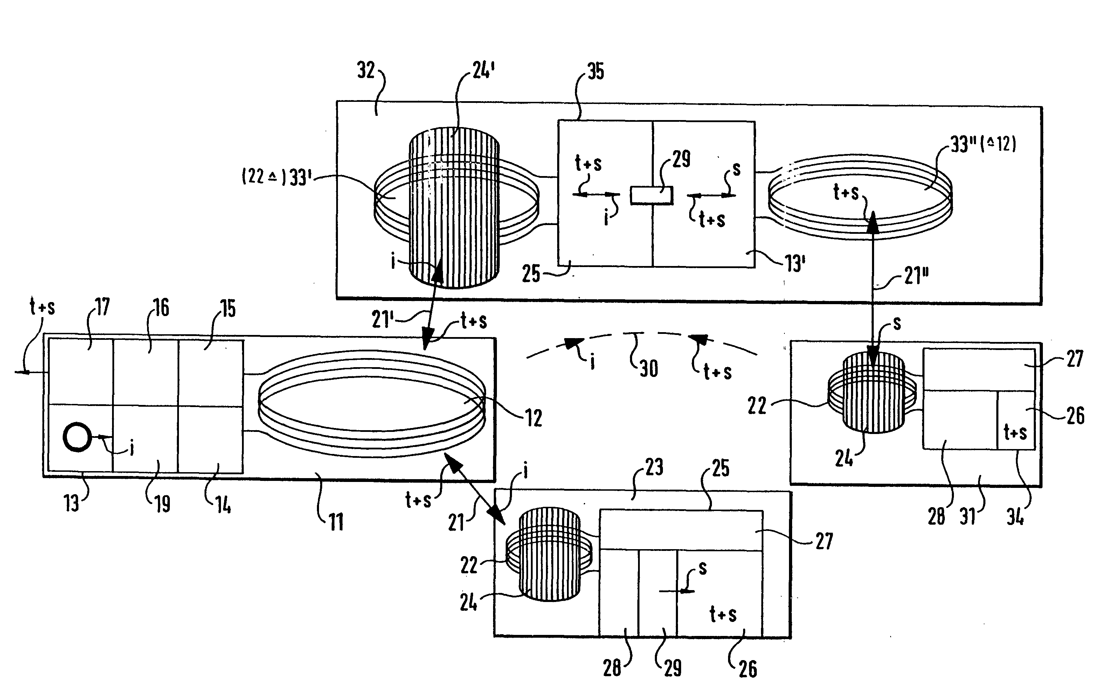

Zusätzliche Alternativen und Weiterbildungen sowie weitere Merkmale und Vorteile der Erfindung ergeben sich aus den weiteren Ansprüchen und aus nachstehender Beschreibung eines in der Zeichnung unter Beschränkung auf das Wesentliche nach Art von Blockschaltbildern stark abstrahiert skizzierten bevorzugten Realisierungsund Einsatzbeispieles zur erfindungsgemäßen Lösung. Die einzige Figur der Zeichnung zeigt die Kommunikation einer Einsatzstellenantenne unmittelbar mit einem komplexeren Transponder sowie mittelbar - nämlich über einen Emulations-Adapter - mit einem einfacheren Transponder.

Bei der in der Zeichnung skizzierten Einsatzstellen-Antenne 11 ist eine als Luftspule gewickelte Antennenspule 12 an eine Antennen-Betriebsschaltung 13 angeschlossen, die einen Radiofrequenz-Sender 14 und einen auf dessen Sendefrequenz abgestimmten Empfänger 15 enthält. Letzterem sind ein Demodulator 16 und ein Interface 17 zur Ausgabe einer Identinformation nachgeschaltet Der Betrieb des Senders 14 wird von einem Modulator 19 zur Übermittlung eines z.B. manuell auslosbaren Initialisierungskommandos i an einen Transponder 23 gesteuert

Von dieser Einsatzstellen-Antenne 11 besteht also über das von der Spule 12 abgestrahlte Hochfrequenzfeld eine unmittelbare induktive Kopplung 21 zu einer Belastungsspule 22 des Transponders 23. Für eine Bündelung des Hochfrequenzfeldes ist die Belastungsspule 22 zweckmäßigerweise mit einem Ferritkern 24 ausgestattet. Ein Transponder-Schaltkreis 25, an den die Belastungsspule 22 angeschlossen ist, weist insbesondere einen Schreib-Lese-Speicher 26 auf, sowie eine Betriebsschaltung 27 zum Gewinnen von Betriebsenergie für den Speicher 26 aus dem von der Belastungsspule 22 über die Kopplung 21 aufgenommenen und gleichgerichteten Hochfrequenzfeld. Ein geschalteter Lastkreis 28 bedämpft die Belastungsspule 22 im Rhythmus der aus dem Speicher 26 ausgelesenen Binärinformationen zur entsprechenden Modulation des Koppel-Feldes. Ein in den Schaltkreis 25 dieses Transponders 23 integrierter Sicherungsgenerator 29, etwa ein Zufallszahlengeber, reagiert auf den Empfang des Initialisierungskommandos i mit dem Einschreiben einer Sicherungsinformation s in den Speicher 26 zusätzlich zur festen, darin ab Herstellung bereits abgelegten, einmaligen und nicht veränderbaren Transponder- (Ident-) Information t.

Darüber hinaus besteht von der Einsatzstellen-Antenne 11 eine weitere, jedoch nicht direkt induktive sondern nur mittelbare Kopplung 30 an einem weiteren, schaltungstechnisch einfacher ausgestatteten und deshalb billigeren Transponder 31 - mittelbar insofern, als diese Kopplung 30 über einen Emulations-Adapter 32 erfolgt. Der weist zwei funktionale Schnittstellen auf, symbolisiert durch zwei getrennte Hochfrequenz-Koppelspulen 33', 33".

Die erste Koppelspule 33' hat in Bezug auf eine unmittelbare Kopplung 21' an die Einsatzstellen-Antenne 11 vollständig die gleiche Wirkungsweise und Funktion, wie die Belastungsspule 22 des mit dem Sicherungsgenerator 29 ausgestatteten Transponders 23, weshalb auch bei dieser ersten Koppelspule 33' in der symbolischen Darstellung der Zeichnung ein Ferritkern 24' zur Veranschaulichung eingetragen ist (wenngleich der jedenfalls dann überflüssig ist, wenn die erste Koppelspule 33' in unmittelbarer räumlicher Nähe zu der (z. B. direkt auf der) Antennenspule 12 der Einsatzstellen-Antenne 11 betrieben wird. Sobald der Adapter 32 von der Einsatzstellen-Antenne 11 ein Initialisierungskommando i empfängt, wird dadurch sein Sicherungsgenerator 29 getriggert, um eine Sicherungsinformation s über die zweite Koppelspule 33" abzugeben.

Die zweite der beiden Koppelspulen 33'' ist als Luftspule dargestellt, weil sie die gleiche Funktion ausübt, wie die Antennenspule 12 der Einsatzstellen-Antenne 11. Von dieser zweiten Koppelspule 33'' ihrerseits besteht wieder eine unmittelbare Hochfrequenz-Kopplung 21" zu einer (wieder mit Ferritkern 24 veranschaulichten) Belastungsspule 22 des anderen Transponders 31 Dessen Schaltkreis 34 ist nun jedoch nicht mit einem Sicherungsgenerator (29 im Falle des wertigeren Transponders 23) ausgestattet, weil der ja schon im Adapter 32 realisiert ist. Der Schreib-Lese-Speicher 26 wird also über die Kopplung 21" mit der bezuglich des Transponders 31 extern (namlich im Adapter 32) erzeugten Sicherungsinformation s versorgt, um die Kombination tös mit der individuellen, im Speicher 26 ohnehin enthaltenen Transponderinformatiot zu ermoglichen.

Somit enthält die Adapcerschaltung 35 prinzipiell eine Kombination von der Antennen-Betriebsschaltung 13 mit dem komplexeren Transponder-Schaltkreis 25, also inklusive Sicherungsgenerator 29 zum lokalen Generieren der Sicherungsinformation s im Adapter 32, die dann von hier aus in den einfacher ausgestatteten Transponder 31 eingeschrieben wird. Die Einsatzstellen-Antenne 11 kann deshalb wahlweise sowohl unmittelbar mit einem Transponder 23 mit integriertem Sicherungsgenerator 29 kommunizieren, wie auch - namlich nun über den Emulations-Adapter 32 - mit einem schaltungstechnisch weniger komplexen und deshalb billigeren Transponder 31, in den eine extern erzeugte Sicherungsinformation s eingeschrieben werden muß, weil sein Schaltkreis 34 nicht über einen integrierten Sicherungsgenerator 29 verfügt. Dazu verhält der Emulations-Adapter 32 sich einerseits wie ein von der Antenne 11 getriggerter (initialisierter) Transponder-Schaltkreis 25 mit integriertem Sicherungsgenerator 29 und andererseits wie eine Antennen-Betriebsschaltung 13 mit zusätzlicher Ausgabe unmittelbar der Sicherungsinformation s (anstelle einer bloßen Trigger- oder Initialisierungsinformation i), sowie zum Auslesen der Informationskombination tös. So kann also erfindungsgemäß mit Hilfe des Emulations-Adapters 32 über die Einsatzstellen-Antenne 11, die an sich für die Initialisierung eines Transponders 23 mit integriertem Sicherungsgenerator 29 ausgelegt ist, auch ein einfacher (nämlich ohne solchen Sicherungsgenerator) ausgestatteter Transponder 31 mit einer aktuellen Sicherungsinformation s beschrieben bzw daraus die Kombination der Transponderinformation t und der momentan mit dieser verknüpften Sicherungsinformation s ausgelesen werden.

Der Emulationsadapter ist also mit einer Koppelspule 33 ausgestaltet, die im Sonderfall im Zeitmultiplex als Belastungsspule 22 oder als Sendespule 12 betreibbar ist.

## Patentansprüche

1. Anordnung einer Einsatzstellen-Antenne (11), mit einer Spule (12) zur induktiven Einkoppiung von HF in eine Belastungsspule (22) in einem Transponder (23; 31) **dadurch gekennzeichnet, daß** die Antenne (11) wahlweise in unmittelbarer Kopplung (21) zu einem infolge integrierten Sicherungsgenerators (29) komplexen Transponder (23) und/oder in mittelbarer Kopplung (30) zu einem einfachen Transponder (31) betreibbar ist und die mittelbare Kopplung (30) zunächst über eine erste unmittelbare Kopplung (21') von der Einsatzstellen-Antenne (11) zu einem Emulationsadapter (32) und danach über eine zweite unmittelbare Kopplung (21") vom Emulationsadapter (32) zum einfachen Transponder (31) arbeitet, wobei der Emulationsadapter (32) sowohl mit einer Antennenbetriebsschaltung (13') wie auch mit einem Transponderschaltkreis (25) samt Sicherungsgenerator (29) und mindestens einer Koppelspule (33) ausgestattet ist.

2. Anordnung einer Einsatzstellen-Antenne nach Anspruch 1, **dadurch gekennzeichnet, daß** der Emulationsadapter (32) mit zwei Koppelspulen (33', 33") ausgestattet ist, von denen die eine als Belastungsspule (22) und die andere als Sendespule (12) ausgelegt ist.

3. Anordnung einer Eisatzstellen-Antenne nach einem der Ansprüche 1 bis 2, **dadurch gekennzeichnet, daß** der Emulationsadapter (32) mit der Koppelspule (33) ausgestattet ist, die im Zeitmultiplex als Belastungsspule (22) oder als Sendespule (12) betreibbar ist.

## Claims

1. An entry station antenna (11) arrangement having a coil (12) for the inductive coupling of high frequency to a loading coil (22) in a transponder (23; 31), **characterised in that** the antenna (11) can be operated selectively in a direct coupling mode (21) with a transponder (23) which is complex by virtue of an integrated safeguard generator (29), and/or in an indirect coupling mode (30) with a simple transponder (31), and that the indirect coupling mode (30) first operates by way of a first direct coupling (21') from the entry station antenna (11) to an emulation adapter (32) and then by way of a second direct coupling (21") from the emulation adapter (32) to the simple transponder (31), the emulation adapter (32) being provided with both an antenna operating circuit (13') and a transponder circuit (25) together with a safeguard generator (29) and at least one coupling coil (33).

2. The entry station antenna arrangement according to claim 1, **characterised in that** the emulation adapter (32) is provided with two coupling coils (33', 33") of which one is designed as a loading coil (22) and the other is designed as a transmitting coil (12).

3. The entry station antenna arrangement according to one of claims 1 to 2, **characterised in that** the emulation adapter (32) is provided with the coupling coil (33) which can be operated in a time multiplex mode as a loading coil (22) or as a transmitting coil (12).

## Revendications

1. Dispositif d'antenne stationnaire transportable (11) présentant une bobine (12) pour le couplage inductif de HF dans une bobine de charge (22) située dans un transpondeur (23; 31), **caractérisé en ce que** l'antenne (11) peut être exploitée au choix dans un couplage direct (21) vers un transpondeur complexe (23) en raison de son générateur de sécurité intégré (29) et/ou dans un couplage indirect (30) vers un transpondeur simple (31), et **en ce que** le couplage indirect (30) fonctionne d'abord de l'antenne stationnaire transportable (11) vers un adaptateur d'émulation (32) par un premier couplage direct (21'), puis de l'adaptateur d'émulation (32) vers un transpondeur simple (31) par un deuxième couplage direct (21"), l'adaptateur d'émulation (32) étant muni aussi bien d'une connexion de service (13') que d'un circuit de commutation de transpondeur (25), y compris d'un générateur de sécurité (29) et d'au moins une bobine de couplage (33).

2. Dispositif d'antenne stationnaire transportable selon la revendication 1, **caractérisé en ce que** l'adaptateur d'émulation (32) est muni de deux bobines de couplage (33', 33"), l'une étant prévue comme bobine de charge (22) et l'autre comme bobine d'émission (12).

3. Dispositif d'antenne stationnaire transportable selon l'une des revendications 1 ou 2, **caractérisé en ce que** l'adaptateur d'émulation (32) est muni de la bobine de couplage (33) qui peut être exploitée comme bobine de charge (22) ou comme bobine d'émission (12) dans le multiplexage temporel.
